# EUROPÄISCHE PATENTSCHRIFT

(11) **EP 0 750 318 B1**
(45) Veröffentlichungstag und Bekanntmachung des Hinweises auf die Patenterteilung: **20.01.1999**
(21) Anmeldenummer: 96109432.3
(22) Anmeldetag: 12.06.1996
(51) Int. Cl.: G21C 3/356

(54) **Gitterförmiger Abstandhalter für ein Kernreaktorbrennelement und Kernreaktorbrennelement**
Spacer grid for nuclear reactor fuel assembly and fuel assembly with such a spacer grid
Grille d'espacement pour un assemblage combustible d'un réacteur nucléaire et assemblage combustible avec une telle grille

(30) Priorität: 19.06.1995 DE 19522160
(43) Veröffentlichungstag der Anmeldung: 27.12.1996
(73) Patentinhaber: SIEMENS AKTIENGESELLSCHAFT, 80333 München (DE)
(72) Erfinder: Steinke, Alexander, 91320 Ebermannstadt (DE)

(56) Entgegenhaltungen:
- DE-A- 1 564 434
- GB-A- 1 374 861
- US-A- 3 852 154
- US-A- 3 890 196
- US-A- 3 904 475
- US-A- 4 314 884

## Beschreibung

Die Erfindung betrifft einen gitterförmigen Abstandhalter für ein Kernreaktorbrennelement entsprechend dem Patentanspruch 1 sowie ein Kernreaktorbrennelement entsprechend Patentanspruch 5.

Es sind gitterförmige Abstandhalter üblich, die eine einzelne Blattfeder in einer Maschenecke aufweisen (siehe z.B. US-A-3.820.196). Diese Blattfeder ist parallel zur Tiefe der Gittermaschen, und ihr sind jeweils starre Noppen zugeordnet, die an den der Blattfeder gegenüberliegenden Maschenwänden ausgebildet sind und gegen die ein die Masche durchgreifender Brennstab von der Feder gepreßt wird. Auf diese Weise ist der Brennstab in der Gittermasche kraftschlüssig gehaltert.

Der Erfindung liegt die Aufgabe zugrunde, einen solchen gitterförmigen Abstandhalter weiterzubilden und das sogenannte "fretting" zu vermeiden, durch das in einem in Betrieb befindlichen Kernreaktor Material außen vom Hüllrohr des Brennstabs in der Gittermasche abgetragen wird.

Die Patentansprüche 2 bis 4 und 6 sind auf vorteilhafte Weiterbildungen des Abstandhalters bzw. Kernreaktorbrennelements gerichtet.

Die Erfindung und ihre Vorteile seien anhand der Zeichnung an einem Ausführungsbeispiel näher erläutert:
Fig. 1 zeigt in Seitenansicht und schematisiert ein Kernreaktorbrennelement für einen Druckwasserkernreaktor.
Fig. 2 zeigt in Draufsicht einen Ausschnitt aus einem gitterförmigen Abstandhalter des Kernreaktorbrennelementes nach Fig. 1.
Fig. 3 zeigt eine Seitenansicht des gitterförmigen Abstandhalters entsprechend Fig. 2 mit einem Schnitt entsprechend der strichpunktierten Linie III-III in Fig. 2.

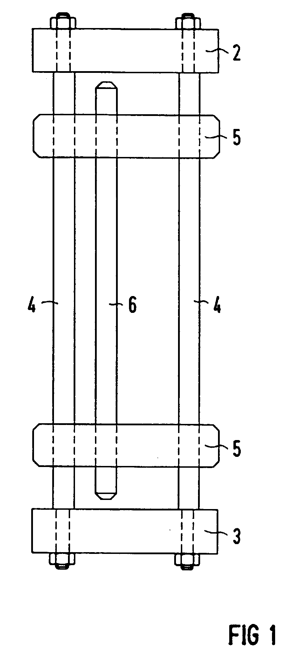

Wie Fig. 1 zeigt, weist ein Kernreaktorbrennelement einen Brennelementkopf 2 und einen Brennelementfuß 3 auf. Ferner sind zwei Steuerstabführungsrohre 4 erkennbar, die keinen Kernbrennstoff enthalten und von denen jedes mit einem Ende am Brennelementkopf 2 und mit dem anderen Ende am Brennelementfuß 3 festgeschraubt ist. Jedes der beiden Steuerstabführungsrohre 4 ist jeweils durch eine Gittermasche von gitterförmigen Abstandhaltern 5 geführt, die mit Abstand voneinander zwischen Brennelementkopf 2 und Brennelementfuß 3 angeordnet sind. Diese Steuerstabführungsrohre sind zumindest am oberen Ende, das am Brennelementkopf 2 festgeschraubt ist, offen, so daß ein Neutronen absorbierender Steuerstab in diese Steuerstabführungsrohre 4 eingeschoben werden kann. Die gitterförmigen Abstandhalter 5 sind formschlüssig außen an den Steuerstabführungsrohren 4 gehaltert, z.B. festgeschweißt.

Mehrere mit Kernbrennstoff gefüllte Brennstäbe, von denen nur ein einzelner Brennstab 6 in Fig. 1 dargestellt ist, sind parallel zueinander und parallel zu den Steuerstabführungsrohren 4 zwischen Brennelementkopf 2 und Brennelementfuß 3 angeordnet. Jeder Brennstab 6 ist jeweils durch eine Gittermasche der gitterförmigen Abstandhalter 5 geführt und in dieser Gittermasche unter Einwirkung von Blattfedern des Abstandhalters kraftschlüssig gehaltert. Jeder Brennstab 6 hat Abstand sowohl vom Brennelementkopf 2 als auch vom Brennelementfuß 3, so daß sich die Länge der Brennstäbe 6 ungehindert Temperaturänderungen anpassen kann.

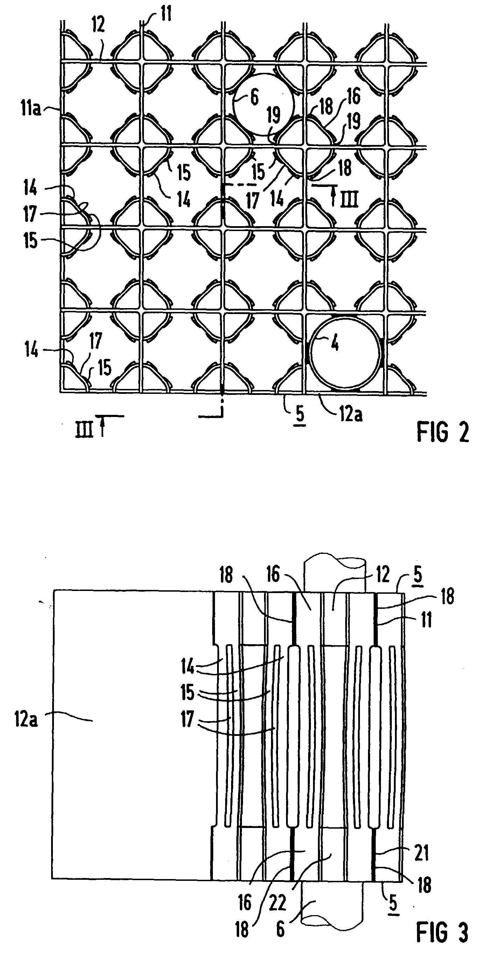

Wie Fig. 2 zeigt, hat ein gitterförmiger Abstandhalter 5 quadratische Gittermaschen, deren Maschenwände durch sich hochkant unter einem rechten Winkel durchsetzende Blechstege 11 und 12 eines Gitters gebildet sind. Ferner ist ein Zusatzgitter vorhanden, das in Fig. 3 erkennbar ist. Dieses Zusatzgitter hat ebenfalls quadratische Maschen, die durch sich hochkant unter einem rechten Winkel durchsetzende Zusatzblechstege 21 und 22 gebildet sind. Diese Zusatzblechstege 21 und 22 sind ebenfalls in Fig. 3 erkennbar. Jeder Zusatzblechsteg 21 ist zu einem Blechsteg 11 parallel, von dem er Abstand hat. Dieser Blechsteg 11 und der Zusatzblechsteg 21 befinden sich flach in einer eine erste Maschenwand einer Gittermasche bestimmenden Ebene. Ebenso ist jeder zu den Zusatzblechstegen 21 rechtwinklige Zusatzblechsteg 22 zu einem der zu den Blechstegen 11 rechtwinkligen Blechstege 12 parallel, von dem er Abstand hat. Dieser Blechsteg 12 und der Zusatzblechsteg 22 befinden sich flach in einer Ebene, die eine zweite, zur ersten Maschenwand rechtwinklige Maschenwand bestimmt.

Die Blechstege 11 und 12 bilden also ein Gitter, die Zusatzblechstege 21 und 22 ein Zusatzgitter, und Gitter und Zusatzgitter sind mit Abstand voneinander und parallel zueinander so angeordnet, daß jeweils jede der quadratischen Maschen des Gitters mit einer der quadratischen Maschen des Zusatzgitters fluchtet. Außerdem sind die Querschnitte dieser beiden quadratischen Maschen deckungsgleich.

Der gitterförmige Abstandhalter 5 hat noch vier äußere Blechstege 11a und 12a, die ebenfalls hochkant angeordnet sind und von denen jeweils zwei äußere Blechstege 11a parallel zu den Blechstegen 11 und den Blechstegen 21 und zwei andere äußere Blechstege 12a parallel zu den Blechstegen 12 und den Zusatzblechstegen 22 sind. Die äußeren Blechstege 11a haben von den neben ihnen befindlichen Blechstegen 11 und Zusatzblechstegen 21 den gleichen Abstand wie zwei nebeneinander befindliche Blechstege 11 oder Zusatzblechstege 21 voneinander, ebenso haben die äußeren Blechstege 12a jeweils von den neben ihnen befindlichen Blechstegen 12 und Zusatzblechstegen 22 den gleichen Abstand wie nebeneinander befindliche Blechstege 12 oder Zusatzblechstege 22 voneinander. Die Blechstege 12 und die Zusatzblechstege 22 durchgreifen an jedem Stegende einen äußeren Blechsteg 11a und sind mit diesem Stegende an diesem äußeren Blechsteg 11a festgeschweißt. Genauso durchgreifen die Blechstege 11 und die Zusatzblechstege 21 an beiden Stegenden einen der äußeren Blechstege 12a und sind mit diesem Stegende an diesem äußeren Blechsteg 12a festgeschweißt. Die Gittermaschen an den äußeren Blechstegen 11a und 12a des gitterförmigen Abstandhalters 5 sind also auch quadratisch und haben einen Querschnitt, der weitgehend deckungsgleich mit dem Querschnitt der anderen Gittermaschen ist.

Zwischen dem Gitter und dem Zusatzgitter stehen an jeder Durchsetzungsstelle von zwei Blechstegen 11 und 12 und zwei Zusatzblechstegen 21 und 22 vier Paare von zueinander und zu der Tiefe der Gittermaschen parallelen Blattfedern 14 und 15.

Diese vier Paare von Blattfedern 14 und 15 bilden an jedem ihrer beiden Enden eine gemeinsame Hülse 16 mit quadratischem Querschnitt. In jeder Ecke dieses quadratischen Querschnitts befindet sich in der Hülse 16 an jedem Hülsenende ein zu den Blattfedern 14 und 15 paralleler Schlitz 18 bzw. 19. Durch zwei sich in gegenüberliegenden Ecken des Querschnitts befindliche Schlitze 18 und 19 verläuft an einem Federende jeweils ein Blechsteg 11 und 12 und am anderen Federende ein Zusatzblechsteg 21 und 22. Diese Blechstege und Zusatzblechstege haltern also die Blattfedern 14 und 15 verdrehungssicher.

In jeweils einer von vier Gittermaschen des gitterförmigen Abstandhalters 5, zu denen die Durchsetzungsstellen zweier Blechstege 11 und 12 sowie zweier Zusatzblechstege 21 und 22 gemeinsame Maschenecke sind, befindet sich eines der vier Paare von Blattfedern 14 und 15. Diese vier Paare von Blattfedern 14 und 15 sind mit der an dem einen Federende befindlichen Hülse 16 an dem aus den Blechstegen 11 und 12 gebildeten Gitter und mit der Hülse 16 an dem anderen Federende am Zusatzgitter aus den Zusatzblechstegen 21 und 22 gehaltert. Jede Durchsetzungsstelle befindet sich in dem Schnittpunkt der Diagonalen des Querschnitts der Hülse 16 an einem der beiden Federenden.

Die Hülsen 16 an den beiden Federenden von Blattfedern 14 und 15, die sich in den vier Maschenecken einer quadratischen Gittermasche des gitterförmigen Abstandhalters 5 befinden, durch die ein Steuerstabführungsrohr 4 geführt ist, sind in dieser Gittermasche seitlich offen, so daß in dieser Gittermasche mit dem Steuerstabführungsrohr 4 keine Blattfedern vorgesehen sind. Stattdessen ist der gitterförmige Abstandhalter 5 in dieser Gittermasche formschlüssig an dem Steuerstabführungsrohr 4 gehaltert, d.h. mit diesem Steuerstabführungsrohr verschweißt.

An einer Maschenecke, die durch einen Blechsteg 11 und einen Zusatzblechsteg 21 mit einem äußeren Blechsteg 12a bzw. durch einen Blechsteg 12 und einen Zusatzblechsteg 22 mit einem äußeren Blechsteg 11a gebildet ist, sind die in den beiden Gittermaschen mit dieser gemeinsamen Maschenecke gehalterten Paare aus parallelen Blattfedern 14 und 15 mit den Federenden nicht nur an dem Blechsteg und dem Zusatzblechsteg, der sich zwischen diesen beiden Maschen befindet und durch einen Schlitz an dem jeweiligen Federende verläuft, sondern auch an dem äußeren Blechsteg befestigt, den die beiden Federenden durchgreifen und an dem auch der Blechsteg und der Zusatzblechsteg befestigt sind, die sich zwischen den beiden Maschen befinden.

In einer Gittermasche in einer Ecke des gitterförmigen Abstandhalters 5 ist jeweils an der Außenecke dieser Gittermasche ein einzelnes Paar zueinander paralleler Blattfedern 14 und 15 mit beiden Federenden parallel zur Maschentiefe angeordnet. Die beiden Federenden durchgreifen sowohl den einen als auch den anderen der sich in dieser Außenecke treffenden äußeren Blechstege 11a und 12a, an denen diese Federenden gehaltert sind.

Ein eine quadratische Gittermasche des gitterförmigen Abstandhalters 5 durchgreifender, Kernbrennstoff enthaltender Brennstab 6 befindet sich mit seiner Mantelfläche jeweils im Zwischenspalt 17 zwischen den beiden zueinander parallelen Blattfedern 14 und 15, die sich in jeder Maschenecke dieser Gittermasche befinden und die relativ großflächig an der Mantelfläche des Brennstabs 6 anliegen. Der Brennstab 6 liegt jedoch nirgends an einer starren Noppe eines Blechstegs oder an einem Blechsteg selbst an. In einem Kernreaktorbrennelement, das sich in einem in Betrieb befindlichen Druckwasser-Kernreaktor befindet, ist deshalb die kraftschlüssige Halterung des Brennstabs in der Gittermasche stark schwingungsgedämpft, so daß kein "fretting" auftreten kann.

## Patentansprüche

1. Gitterförmiger Abstandhalter für ein Kernreaktorbrennelement mit quadratischen Gittermaschen, deren Maschenwände durch sich hochkant durchsetzende Blechstege (11, 12) eines Gitters gebildet sind, dadurch gekennzeichnet, daß
eine Gittermasche des Gitters in jeder Maschenecke zwei paarweise nebeneinander unter Ausbildung eines Zwischenspalts (17) angeordnete, zu der Tiefe der Gittermaschen parallele Blattfedern (14, 15) aufweist, die an beiden Federenden starr miteinander verbunden und die mit einem Federende an einer Durchsetzungsstelle zweier Blechstege (11, 12) an diesen beiden sich durchsetzenden Blechstegen (11, 12) gehaltert sind.

2. Gitterförmiger Abstandhalter nach Anspruch 1
mit Blattfedern (14, 15), die mit dem anderen Federende jeweils an einer Durchsetzungsstelle zweier zu einem Zusatzgitter mit quadratischen Gittermaschen gehörenden, sich hochkant durchsetzenden Zusatzblechstegen (21, 22) gehaltert sind, von denen der eine Zusatzblechsteg (21) zu einem (11) der beiden Blechstege (11, 12), an dem das eine Federende gehaltert ist, parallel ist und sich mit diesem Blechsteg (11) in derselben ersten Ebene befindet, während der andere Zusatzblechsteg (22) zu dem anderen (12) der beiden Blechstege (11, 12), an dem das eine Federende gehaltert ist, parallel ist und sich mit diesem anderen (12) der beiden Blechstege (11, 12) in derselben zweiten Ebene befindet.

3. Gitterförmiger Abstandhalter nach Anspruch 1 oder 2
mit Blattfedern (14, 15), die an dem einen Federende einen Schlitz aufweisen, durch den einer der beiden Blechstege (11, 12) an der Durchsetzungsstelle geführt ist.

4. Gitterförmiger Abstandhalter nach Anspruch 3
mit Blattfedern (14, 15), die an dem anderen Federende einen Schlitz aufweisen, in den einer der beiden Zusatzblechstege (21, 22) an der Durchsetzungsstelle geführt ist.

5. Kernreaktorbrennelement mit zueinander parallelen, nebeneinander angeordneten, Kernbrennstoff enthaltenden Brennstäben (6) und einem gitterförmigen Abstandhalter (5) nach einem der Ansprüche 1 bis 4 mit Gittermaschen, durch die jeweils einer der Brennstäbe (6) geführt ist, an dem die paarweise in den vier Maschenecken angeordneten Blattfedern (14, 15) flach anliegen.

6. Kernreaktorbrennelement nach Anspruch 5 mit einem Brennstab (6), der seitlich in den Zwischenspalt (17) zwischen den paarweise angeordneten Blattfedern (14, 15) greift.

## Claims

1. A lattice-like spacing element for a nuclear reactor fuel element with square lattice apertures, whose aperture walls are formed by sheet metal webs (11, 12) of a lattice which intersect upright, characterised in that a lattice aperture of the lattice comprises in each aperture corner two leaf springs (14, 15) arranged in pairs adjacent one another parallel to the depth of the lattice aperture to form an intermediate gap (17), the leaf springs (14, 15) being rigidly connected to one another at the two spring ends and being secured with one spring end at an intersection point of two sheet metal webs (11, 12) to these two intersecting sheet metal webs (11, 12).

2. A lattice-like spacing element according to claim 1 with leaf springs (14, 15), which are held at the other spring end at an intersection point of two additional sheet metal webs (21, 22) intersecting one another upright and belonging to an additional lattice with square lattice apertures, of which one additional sheet metal web (21) is parallel to one (11) of the two sheet metal webs (11, 12) to which a spring end is secured and is arranged with this sheet metal web (11) in the same first plane, whilst the other additional sheet metal web (22) is parallel to the other (12) of the two sheet metal webs (11, 12) to which a spring end is secured and is arranged with this other (12) of the two sheet metal webs (11, 12) in the same second plane.

3. A lattice-like spacing element according to claim 1 or 2 with leaf springs (14, 15), which at one spring end comprise a slot, through which one of the two sheet metal webs (11, 12) is guided at the intersection point.

4. A lattice-like spacing element according to claim 3 with leaf springs (14, 15), which at the other spring end comprise a slot, in which one of the two additional sheet metal webs (21, 22) is guided at the intersection point.

5. A nuclear reactor fuel element with fuel rods (6) containing nuclear fuel arranged parallel and adjacent to one another and a lattice-like spacing element (5) according to one of claims 1 to 4 with lattice apertures, through which one of the fuel rods (6) is guided in each case, against which the leaf springs (14, 15) arranged in pairs in the four aperture corners rest flat.

6. A nuclear reactor fuel element according to claim 5 with a fuel rod (6), which engages laterally in the intermediate gap (17) between the leaf springs (14, 15) arranged in pairs.

## Revendications

1. Grille d'espacement pour un assemblage combustible d'un réacteur nucléaire à mailles de grille carrées, dont les parois de maille sont formées de parties (11, 12) pleines en tôle entrecroisées sur champ d'une grille, caractérisée en ce qu'une maille de la grille comporte en chaque sommet de la maille deux ressorts (14, 15) à lame parallèles disposés par paire l'un à côté de l'autre en formant un intervalle (17), allant jusqu'à la profondeur des mailles de la grille, reliés rigidement l'un à l'autre aux deux extrémités du ressort et qui sont maintenus par une extrémité du ressort en un point de croisement de deux parties (11, 12) pleines en tôle à ces deux parties (11, 12) pleines en tôle qui s'entrecroisent.

2. Grille d'espacement suivant la revendication 1,
comprenant des ressorts (14, 15) à lame, qui sont maintenus par l'autre extrémité de ressort, respectivement en un point de croisement de deux parties (21, 22) pleines en tôle supplémentaires s'entrecroisant sur champ et appartenant à une grille supplémentaire à mailles de grille carrées, l'une des parties (21) de tôle supplémentaire étant parallèle à l'une des deux parties (11, 12) de tôle à laquelle l'une des extrémités de ressort est maintenue et se trouvant par cette partie (11) pleine de tôle dans le même premier plan, tandis que l'autre partie (22) pleine de tôle supplémentaire est parallèle à l'autre (12) des deux parties (11, 12) pleines de tôle à laquelle l'une des extrémités de ressort est maintenue et se trouve par cette autre (12) des deux parties (11, 12) pleines de tôle dans un même deuxième plan.

3. Grille d'espacement suivant la revendication 1 ou 2,
comprenant des ressorts (14, 15) à lame, qui comportent une fente à l'une des extrémités de ressort, fente dans laquelle passe au point de croisement l'une des deux parties (11, 12) pleines de tôle.

4. Grille d'espacement suivant la revendication 3,
comprenant des ressorts (14, 15) à lame, qui comportent à l'autre extrémité de ressort une fente dans laquelle passe au point de croisement l'une des deux parties (21, 22) pleines de tôle supplémentaires.

5. Assemblage combustible de réacteur nucléaire, comprenant deux crayons (6) combustibles parallèles disposés l'un à côté de l'autre et contenant du combustible nucléaire et une grille (5) d'espacement suivant l'une des revendications 1 à 4, ayant des mailles de grille dans lesquelles passe respectivement l'un des crayons (6) combustibles, auquel les ressorts (14, 15) à lame, disposés par paire aux quatre sommets de la maille, s'appliquent à plat.

6. Assemblage combustible de réacteur nucléaire suivant la revendication 5, comprenant un crayon (6) combustible qui pénètre latéralement dans l'intervalle (17) compris entre les ressorts (14, 15) à lame disposés par paire.
